# EUROPEAN PATENT APPLICATION

(11) **EP 4 624 335 A1**
(43) Date of publication of application: **01.10.2025**
(21) Application number: 24166302.0
(22) Date of filing: 26.03.2024
(51) Int. Cl.: B64D 27/34, B32B 3/12, B64D 27/355, B64D 27/357, B64D 37/30, B64D 37/32

(54) **WALL ELEMENT, ESPECIALLY FOR A SAFE CHAMBER, AS WELL AS A SAFE CHAMBER, AN AIRCRAFT COMPONENT AND AN AIRCRAFT EQUIPPED THEREWITH**

(71) Applicant: Airbus Operations GmbH, 21129 Hamburg (DE)
(72) Inventor: Elbracht, Dirk, 21129 Hamburg (DE); Müller, Matthias, 21129 Hamburg (DE)

(57) **Abstract**

In order to enhance safety on an aircraft (14) without enlarging drag while saving weight, the invention proposes a wall element (10) for protection against mechanical impacts or bursts, the wall element (10) comprising a continuous support shell (56) covered on at least one side thereof with an energy absorbing composite material (20) comprising platelets (58) arranged in several parallel laminas with an elastic matrix material (60) therebetween, wherein the material of the platelets (58) is harder than the elastic material. Further, a safety chamber (12) having at least one such wall element (10) configured as a safe for equipment (18) operating with flammable medium is proposed.

## Description

The invention relates to a wall element, especially for a safe chamber, for protection against mechanical impacts or bursts. Further, the invention relates to a safe chamber for enclosing an equipment working with a flammable medium, such as hydrogen. Still further, the invention relates to an aircraft component comprising such an equipment and a safe chamber enclosing it. Finally, the invention relates to an aircraft comprising such a wall element, such a safe chamber and/or such an aircraft component.

Reference is made to the following literature:
[1] EP 4 296 158 A1
[2] Wikipedia - Nacre, retrieved on March 14, 2024 from https://en.wikipedia.org/w/index.php?title=Nacre&oldid=1210129791
[1] describes an aircraft powered at least partially with hydrogen wherein a variable fairing is provided for venting the space around a hydrogen duct installation.

Some embodiments of the invention aim at solutions to enhance safety measures, especially for handling hydrogen on aircrafts.

An object of the invention is to provide a new safety device which is improved for use on aircraft.

For achieving such object, the invention provides a wall element according to claim 1. A safety chamber, an aircraft component and an aircraft including such a wall element are the subject-matters of the further independent claims.

Advantageous embodiments are subject-matters of the dependent claims.

The invention provides according to a first aspect thereof a wall element for protection against mechanical impacts or bursts, the wall element comprising a continuous support shell covered on at least one side thereof with an energy absorbing composite material comprising platelets arranged in several parallel laminas with an elastic matrix material therebetween, wherein the material of the platelets is harder than the elastic material.

Especially, the platelets are arranged in a continuous parallel lamina embedded in the elastic matrix material. Several of such laminas are stacked one above the other.

In some embodiments, the platelets are stacked in an overlapping manner embedded in or connected with an elastic matrix material.

In preferred embodiments, the energy absorbing composite material is a biomimetic material imitating nacre. Reference is made to literature [2] for further features of nacre, at least some of which are also provided by the energy absorbing composite material.

In some embodiments, the energy absorbing composite material has a brick-and-mortar structure wherein the platelets are arranged in layers in an overlapping brickwork arrangement with thinner layers of elastic matrix material therebetween.

In some embodiments, the platelets are chosen from the group consisting of hexagonal platelets, platelets with irregular contours, polygonal platelets, rectangular platelets, flakes, flat grains, and flat bricks.

In some embodiments, the material of the platelets is chosen from the group consisting of ceramic, metal, aluminium, steel, titanium, carbon, glass, pieces of fibre, fibre snippets, polymer that is harder than the matrix material, aramid, and thermoplastic material that is harder than the matrix material.

In some embodiments, the matrix material is chosen from the group consisting of polymer, rubber, resin, epoxy, thermoplastics, and thermosetting plastics.

In some embodiments, the material of the support shell is chosen from the group consisting of metal, aluminium, steel, titanium, composite material, fibre reinforced composite material, and CFRP.

In some embodiments, the platelets have a wide in the range of 1 µm to 1000 µm, preferably 1 µm to 500 µm, more preferably 2 µm to 100 µm, most preferred 10 µm to 20 µm. In some embodiments, the platelets a thickness in the range of 0.01 µm to 20 µm, preferably, 0.05 µm to 5 µm, more preferably 0.1 µm to 1 µm.

The wall elements could be used anywhere, where a lightweight protection against impacts or bursts is wished. Especially, the wall element can be used to separate an area or a part to be protected from a space where a risk of impacts or bursts exists.

In preferred embodiments, the wall element is configured to confine a safe compartment or safe container for enclosing equipment that contains or works with flammable media or other media that can lead to an explosive mixture. Examples for such equipment are hydrogen installations, batteries, hydrogen ducts or elements containing hydrogen such as fuel cells.

According to another aspect, the invention provides a safe chamber for an aircraft, configured to enclose equipment containing potentially flammable and/or potentially explosive media, wherein the safe chamber has at least one wall element according to any of the aforementioned embodiments.

According to another aspect, the invention provides an aircraft component comprising an equipment containing potentially flammable and/or potentially explosive media enclosed in such a safe chamber. In other words, the aircraft component includes the safe chamber wherein at least one wall thereof, preferably all walls thereof, are made from wall elements according to any of the aforementioned embodiments. The equipment is enclosed in the safe chamber.

In some embodiments, the equipment comprises at least one of a hydrogen duct installation, a hydrogen receptacle, a hydrogen duct, a fuel cell, and a battery.

According to another aspect, the invention provides an aircraft comprising a wall element according to any of the aforementioned embodiments. According to another aspect, the invention provides an aircraft comprising a safe chamber according the aforementioned embodiment. According to another aspect, the invention provides an aircraft comprising an aircraft component according to any of aforementioned embodiments.

In some embodiments, the aircraft has a propulsion system comprising a propulsion element such as a propeller or a fan, an electric motor for driving the propulsion element and at least one energy source for supplying the electric motor with electrical energy, wherein the at least one energy source is arranged and enclosed within the safe chamber having at least one wall element according to any of aforementioned embodiments.

In some embodiments, the at least one energy source is or comprises at least one fuel cell, especially a hydrogen powered fuel cell.

Some embodiments of the invention relate to a bio-inspired H2 safety chamber. Especially, the safety chamber is configured such that a potential explosion of a gas mixture is confined within a safe space. Some embodiments of the invention relate to a bio-inspired H2 explosion chamber or a safe containment for hydrogen systems. Preferred uses of a wall element or a safety chamber or safe chamber according to embodiments of the invention is on electrically driven aircraft, e.g. aircrafts with hydrogen systems or battery systems. Some embodiments relate to the idea to have a confined safe chamber enclosing potentially explosive media in a safe manner. In order to enhance the safe chamber with regard to weight and safety, a new wall material is proposed.

Basically, the most preferred application of wall elements according to embodiments of the invention and/or of safe chambers made therefrom is seen in the perimeter of hydrogen fuel cells and zero emissions aircrafts such as the ZEROe project of the applicant, so it affects future developments in the direction of new drive systems.

While this is the most preferred use of wall elements according to embodiments of the invention, the wall element could also be used for protection against other impacts or bursts, e.g. in shielding.

As explained in [1], one challenge of an aircraft with hydrogen systems is that hydrogen leaks quite easily. One possible solution to enhance safety addressing potential H2 leakage is to provide vents in order to keep the H2 concentrations low.

According to embodiments of the invention, a hydrogen system (or any other system containing a flammable medium with a potential risk of generating a potentially explosive gas mixture is confined in a safe space (e.g. an explosive chamber). For testing batteries or other equipment with a potential explosion risk, explosion chambers build-up by conventional material such as massive steel are known on the market. In embodiments of the invention a new bio-inspired material is used to build up a wall for protection against impacts or bursts, especially as this is required in walls for explosion chambers. In some embodiments, the structure of a safe chamber is build-up by functional material which follows models of nature.

In some embodiments, a safe chamber is designed by the use of a combination of materials capable of deforming and absorbing energy, inspired by nature. The structure of nacre served as an explicit model.

In some embodiments, such a safe chamber is used for enclosing hydrogen systems in case of leakage failure (for potentially explosive areas). This idea is of course also applicable to other potentially explosive areas, e.g. battery chambers.

With wall elements according to embodiments of the invention, a statically designed structure can be designed with significantly reduced weight, since the structure does not have to absorb the potentially high explosion loads.

Some embodiments relate to a safety containment for aircraft equipment operating with a flammable or potentially explosive medium such as H2 (in case of leakage), the containment wall comprising a preferably self-supporting shell and an energy absorbing coating on at least one of the inner and outer sides of the shell wherein the energy absorbing coating has a structure imitating nacre or a nacre-like structure.

Embodiments of the invention are explained below referring to the accompanying drawings in which:
- Fig. 1: a schematic side view, partly broken away, with several aircraft components for illustrating preferred uses of a new protective wall element;
- Fig. 2: a sectional view along the section line II-II in Fig. 1 through one of the aircraft components of the aircraft, showing a safe chamber and an equipment enclosed therein;
- Fig. 3: the greatly enlarged detail III of Fig. 2, showing microscopic structures of a part of a wall element of the safe chamber;
- Fig. 4: a sectional view through an energy absorbing material of the wall element along line IV-IV of Fig. 3;
- Fig. 5, 6, and 7: sectional views through safe chambers according to further embodiments; and
- Fig. 8: a plan view onto a support shell of the wall element according to some embodiments of the invention.

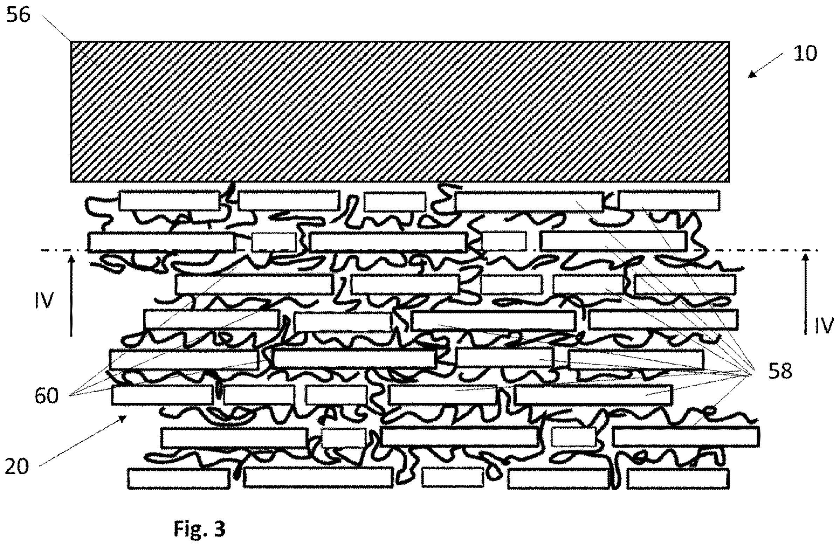

In the following preferred embodiments and preferred uses of a wall element 10 for protection against mechanical impacts or bursts are explained in more detail with reference to the accompanying drawings. A greatly enlarged schematic view of the wall element 10 is shown in Fig. 3. While the wall element 10 will be described on way of example as part of a safe chamber 12 for an aircraft 14, the wall element 10 could be used for many different purposes, especially those where a good, reliable and long-lasting protection shall be provided and where weight is an issue, such as different uses in vehicles, aircrafts or other aeronautic fields.

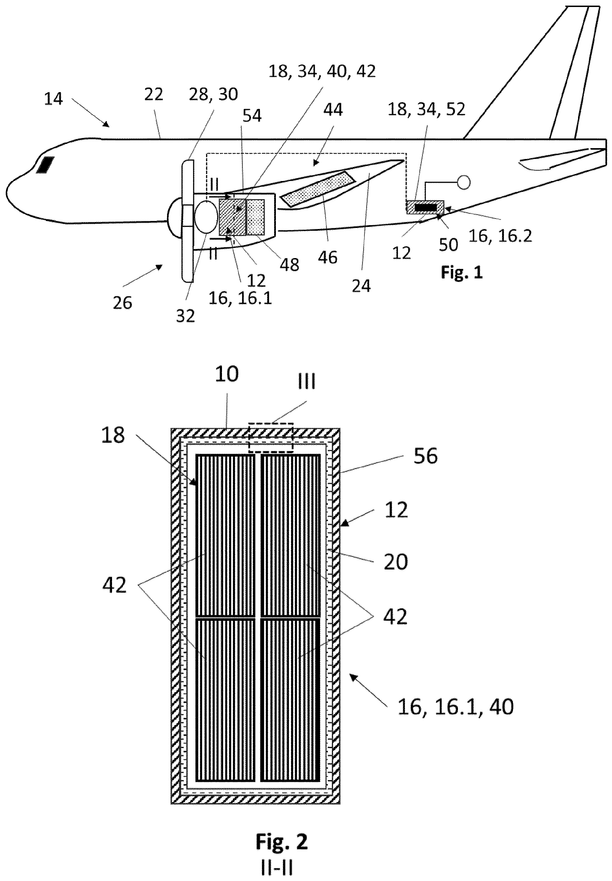

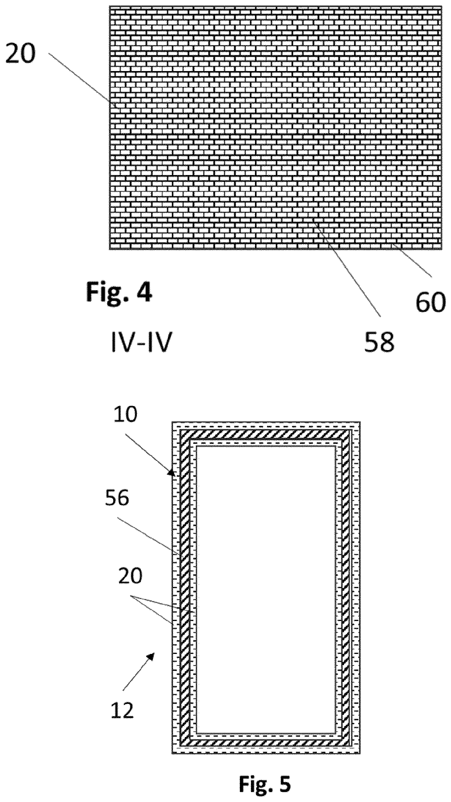

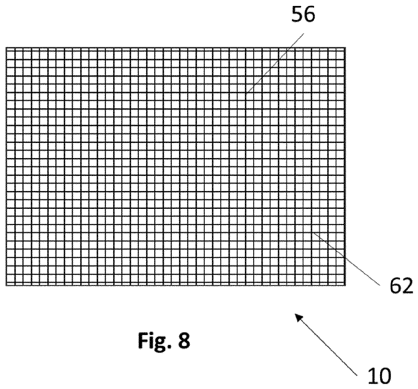

A possible embodiment of the aircraft 14 is shown in Fig. 1. Fig. 2 shows an example of a component 16 of the aircraft 14 wherein equipment 18 is enclosed in the safe chamber 12 made with the wall element 10. Fig. 3 and 4 illustrate the biomimetic structure of the wall element 10 and of an energy absorbing composite material 20 thereof. Figs. 5 to 7 show further possible embodiments of the safe chamber 12. Fig. 8 illustrates possible reinforcement structures for a shell of the safe chamber 12.

Fig. 1 shows an electrically and/or hydrogen powered aircraft 14 with a fuselage 22 (e.g. with a passenger and/or cargo cabin), wings 24 and a propulsion system 26, especially an electrically or hydrogen driven propulsion system 26. In the embodiment shown, the propulsion system is an electrical propulsion system 26. The electric propulsion system 26 comprises a propulsion element 28 such as a propeller 30 or a fan, an electric motor 32 for driving the propulsion element 28 and at least one energy source 34 for supplying the electric motor 32 with electrical energy. In other embodiments of the aircraft (not shown), the propulsion system 26 comprises an internal combustion engine (e.g. a turbine) configured to burn hydrogen.

Several components 16 of the aircraft 14, e.g. components 16 containing one of the energy sources 34 and/or components 16 for processing, handling, ducting, and/or storing hydrogen, include equipment 18 enclosed in a safe chamber 12. In the embodiment shown, a first component 16.1 is a fuel cell unit 40 containing several fuel cells 42 to be provided with hydrogen from a hydrogen supply 44. The hydrogen supply 44 includes a hydrogen tank 46 and a hydrogen distribution device 48 for a controlled distribution of hydrogen to the several fuel cells 42. A second component 16.2 is a battery unit 50 containing at least one battery 52 enclosed in the safe chamber 12. In the second component 16.2, the safe chamber 12 is configured as a battery chamber.

The design and function of the safe chamber 12 is now explained by way of example referring to the first component 16.1 wherein the equipment 18 includes at least one fuel cell 42, which is an example for an equipment 18 operating with hydrogen. In this case, the safe chamber 12 is a protection device for improving safety with handling of hydrogen on the aircraft 14. Hydrogen is an example for a flammable medium.

For a hydrogen fire to occur, a sufficient concentration of hydrogen, the presence of an ignition source, and the right amount of oxidizer (such as oxygen) must all be present. Hydrogen has a wide range of flammability (4-77% in air) and the energy required to ignite hydrogen can be very low (about 1/10 the energy required to ignite gasoline).

The flammable hydrogen concentration (from 4%) is reached relatively quickly as soon as there is a leak. Adequate and technically well-thought-out ventilation, such as proposed in literature [1] is definitely an appropriate solution for many design cases, especially for a small fuel cell aircraft.

For large aircraft 14, an appropriate ventilation would be theoretically conceivable, but would lead to higher energy loss due to drag. This is an issue, which leads to higher fuel consumption and probably to more weight.

Fig. 1 shows the configuration of a fuel cell stack - fuel cell unit 40 - in a passenger aircraft 14. For a good ventilation, a large room, e.g. nearly the whole interior of an engine nacelle 54, should be permanently ventilated with the result that precisely this ventilation would lead to high air resistance (and therefore to more fuel consumption).

The safe chamber 12 as preferable use of the wall element 10 provides a solution to the problem of enhancing safety without increasing air resistance. The safe chamber 12 provides a fire dedicated zone, i.e., a kind of safe that encloses the entire system - e.g. the equipment 18.

One challenge is to dimension this safe in such a way that it can withstand high impact energy within a very short time interval. The material behaviour is completely different than in static applications. It is precisely this circumstance that makes dimensioning complex. In addition, it must be noted that this has to be a fail-safe system. Therefore, different embodiments of wall elements 10 are proposed. The wall elements 10 are now described in more detail referring to Figs. 3 to 8.

Fig. 2 is a sectional view through the component 16 with the equipment 18 enclosed in the safe chamber 12. Fig. 3 shows a greatly enlarged detail of the wall element 10. Fig. 4 shows a sectional view through the energy absorbing composite material 20 of the wall element 10 according to an exemplary embodiment thereof.

The wall element 10 is made with a material which is able to act as energy absorption with very little deformation and absolute tightness in the deformed state. Especially, the wall element 10 has a combination of materials capable of deforming and absorbing energy, inspired by biomimicry. In some embodiments, the safe chamber 10 is build-up by tailored material based on the idea, which has been developed by nature within nacre.

The wall element 10 is configured as a separation element for protection against mechanical impacts or bursts. The wall element 10 comprises a continuous support shell covered on at least one side thereof with an energy absorbing composite material 50. The energy absorbing composite material 20 comprises platelets 58 arranged in a continuous parallel lamina embedded in an elastic matrix material 60. The material of the platelets is harder than the elastic matrix material 60.

In preferred embodiments, the energy absorbing composite material 20 is a biomimetic material imitating nacre.

If you look at how nacre is designed, it is like a brick wall. A single crack in this wall could not propagate through all the elements - as in this case of nacre - linked by a biological matrix. For the technical application this template from nature is used to design a material combination build-up from different layers:
a) a layer modelled after the structure & functionality of nacre - for energy absorption, i.e. the energy absorbing composite material 20,
b) a supporting layer, especially an outer layer, made of a conventional material (e.g. metallic materials, composites) - for the introduction of static loads, i.e. the support shell 56.

It is possible to adapt the corresponding manufacturing process to integrate such structures for higher impact resistance. In the wall element 10 as proposed here an energy-absorbing layer (inspired by nature) is introduced, so that the actual, statically designed structure can be designed with significantly reduced weight, since it does not have to absorb the high explosion loads.

In preferred embodiments, the energy absorbing composite material 20 has a brick-and-mortar structure wherein the platelets 58 are arranged in layers in an overlapping brickwork arrangement with thinner layers of elastic matrix material 60 therebetween.

The platelets 58 can have any contour. E.g., the platelets 58 are hexagonal platelets, platelets with irregular contours, polygonal platelets, rectangular platelets, flakes, flat grains, and/or flat bricks.

The material of the platelets 58 is harder than the elastic matrix material. The platelets 58 can be made from any suitable material that delivers a similar function as the platelets within nacre. Example materials include ceramic, metal, aluminium, steel, titanium, carbon, glass, pieces of fibre, fibre snippets, polymer that is harder than the matrix material, aramid, and thermoplastic material that is harder than the matrix material.

The matrix material 60 is a material that connects the platelets 58 in an elastic manner. Examples for the matrix material 60 include polymer, rubber, resin, epoxy, thermoplastics, and thermosetting plastics.

The support shell 56 is configured to introduce static loads. The support shell 56 is preferably a continuous flat fluid-tight shell. Example materials for the support shell are metal, aluminium, steel, titanium, composite material, fibre reinforced composite material, and CFRP.

As in nacre, the mortar and brick structure of the energy absorbing composite material is preferably in a micro-structure. Thus, the platelets 58 preferably have a wide in the range of 1 µm to 1000 µm, preferably 1 µm to 500 µm, more preferably 2 µm to 100 µm, most preferred 10 µm to 20 µm, and/or
a thickness in the range of 0.01 µm to 20 µm, preferably, 0.05 µm to 5 µm, more preferably 0.1 µm to 1 µm.

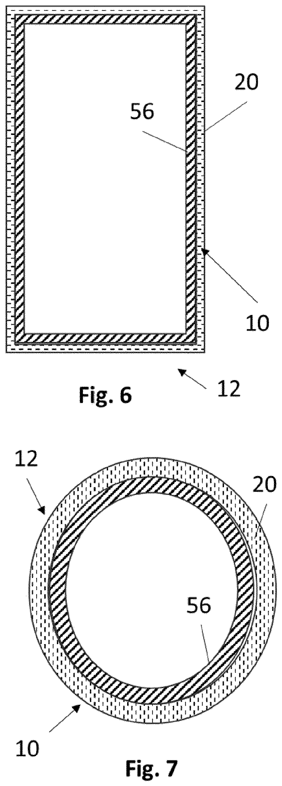

The wall element 12 can have any suitable form such as a plate, a cap, a tube or any other form of a hollow body. The safe chamber 12 may be made with several of the wall elements 12 that are connected in a fluid-tight manner. For example, a part of the safe chamber 12 may be a wall element in a tubular form, with any suitable cross section, e.g. rectangular, circular, ellipsoid, polygonal, see Figs. 3, and 7.

Referring to Figs. 2, 5, and 6, the energy absorbing composite material 20 can be arranged on the inner side of the shell 56, the outer side of the shell 56 or on both the inner and outer side of the shell 56.

Referring to Fig. 8, the shell 56 may have reinforcing elements such as reinforcement ribs 62.

Different manufacturing processes are possible for the wall material. According to some examples for manufacturing, first the shell is provided and then coated with the energy absorbing matrix material 20. The application of the energy absorbing matrix material 20 may be done by added manufacturing or by layer wise application of matrix material 60 and embedding the platelets 58 therein. In some embodiments, energy absorbing composite material 20 is provided in form of a thin film containing one layer or a small number of layers of the platelets 58 and one or a small number of layers of the matrix material 60; several of these films may be laid one above the other.

In some embodiments, the design of the safe chamber 12 uses design principles of explosion chambers as used currently for the research of explosive materials. In some embodiments, the safe chamber 12 is cylindrical, which is a simple and cost-effective design. In some embodiments, the safe chamber 12 is spherical. This offers the best pressure distribution due to the uniform shape, but is more complex and expensive to manufacture. In some embodiments, the safe chamber 12 is hemispherical which is a compromise between cylindrical and spherical, offering good pressure distribution with a simpler design.

The wall element 10 of the safe chamber 12 implements nacre-inspired materials (brick-and-mortar structure, biomimetic composites) for a lighter and potentially stronger chamber. The structure of the safe chamber 12 is a layered construction with alternating strong and compliant materials. This can absorb and distribute a potential shockwave more effectively. In some embodiments, the energy absorbing composite material 20 is arranged on the inner side of the safe chamber 12. Thus, a microscopically patterned inner surface is integrated. This can deflect and disperse a potential shockwave, reducing stress on the entire chamber.

Further, the safe chamber 12 can be provided with a venting system (not shown). For example, the venting system includes at least one pressure relief valve and/or at least one bursting disc. Preferably, the venting system is configured to release pressure in a controlled manner, potentially reducing the overall pressure the chamber 12 needs to withstand. For example, the venting system has a pressure sensor, a valve and a control configured to control a flow through the valve in dependence from the signal of the pressure sensor.

Overall, nacre principles offer exciting possibilities for next-generation explosion chambers and safe chambers or other protection devices for protection against impacts or bursts. By incorporating concepts like layered materials, micro-structured surfaces, and potentially even adaptable venting systems, engineers can create lighter, stronger, and more resilient safe chambers 12.

In order to enhance safety on an aircraft (14) without enlarging drag while saving weight, proposes a wall element (10) has been proposed for protection against mechanical impacts or bursts, the wall element (10) comprising a continuous support shell (56) covered on at least one side thereof with an energy absorbing composite material (20) comprising platelets (58) arranged in several parallel laminas with an elastic matrix material (60) therebetween, wherein the material of the platelets (58) is harder than the elastic material. Further, a safety chamber (12) having at least one such wall element (10) configured as a safe for equipment (18) operating with flammable medium is proposed.

### Reference sign list:

- 10: wall element
- 12: safe chamber
- 14: aircraft
- 16: component
- 16.1: first component
- 18: equipment
- 20: energy absorbing composite material
- 22: fuselage
- 24: wing
- 26: propulsion system
- 28: propulsion element
- 30: propeller
- 32: electric motor
- 34: energy source
- 40: fuel cell unit
- 42: fuel cell
- 44: hydrogen supply
- 46: hydrogen tank
- 48: hydrogen distribution device
- 50: battery unit
- 52: battery
- 54: nacelle
- 56: shell
- 58: platelets
- 60: matrix material
- 62: reinforcement ribs

## Claims

1. Wall element (10) for protection against mechanical impacts or bursts, the wall element (10) comprising a continuous support shell (56) covered on at least one side thereof with an energy absorbing composite material (20) comprising platelets (58) arranged in several parallel laminas with an elastic matrix material (60) therebetween, wherein the material of the platelets (58) is harder than the elastic material.

2. Wall element (10) according to claim 1, wherein the energy absorbing composite material (20) is a biomimetic material imitating nacre.

3. Wall element (10) according to any of the preceding claims, wherein the energy absorbing composite material (20) has a brick-and-mortar structure wherein the platelets (58) are arranged in layers in an overlapping brickwork arrangement with thinner layers of elastic matrix material (60) therebetween.

4. Wall element (10) according to any of the preceding claims, wherein the platelets (58) are chosen from the group consisting of hexagonal platelets, platelets with irregular contours, polygonal platelets, rectangular platelets, flakes, flat grains, and flat bricks.

5. Wall element (10) according to any of the preceding claims, wherein the material of the platelets (58) is chosen from the group consisting of ceramic, metal, aluminium, steel, titanium, carbon, glass, pieces of fibre, fibre snippets, polymer that is harder than the matrix material, aramid, and thermoplastic material that is harder than the matrix material.

6. Wall element (10) according to any of the preceding claims, wherein the matrix material (60) is chosen from the group consisting of polymer, rubber, resin, epoxy, thermoplastics, and thermosetting plastics.

7. Wall element (10) according to any of the preceding claims, wherein the material of the support shell (56) is chosen from the group consisting of a flat material with reinforcement structures, metal, aluminium, steel, titanium, composite material, fibre reinforced composite material, and CFRP.

8. Wall element (10) according to any of the preceding claims, wherein the platelets (58) have
a wide in the range of 1 µm to 1000 µm, preferably 1 µm to 500 µm, more preferably 2 µm to 100 µm, most preferred 10 µm to 20 µm, and/or
a thickness in the range of 0.01 µm to 20 µm, preferably, 0.05 µm to 5 µm, more preferably 0.1 µm to 1 µm.

9. Safe chamber (12) for an aircraft (14), configured to enclose equipment (18) containing potentially flammable and/or potentially explosive media, wherein the safe chamber (12) has at least one wall element (10) according to any of the preceding claims.

10. Aircraft component (16, 16.1, 16.2) comprising an equipment (18) containing potentially flammable and/or potentially explosive media enclosed in a safe chamber (12) according to claim 9.

11. Aircraft component (16. 16.1, 16.2) according to claim 10, wherein the equipment (18) comprises at least one of a hydrogen duct installation, a hydrogen receptacle, a hydrogen duct, a fuel cell (42), and a battery (52).

12. Aircraft (14) comprising a wall element (10) according to any of the claims 1 to 8 and/or a safe chamber (12) according to claim 9 and/or an aircraft component (16, 16.1, 16.2) according to any of the claims 10 or 11.

13. Aircraft (14) according to claim 12, wherein the aircraft (14) has a propulsion system (26) comprising a propulsion element (28) such as a propeller (30) or a fan, an electric motor (32) for driving the propulsion element (28) and at least one energy source (34) for supplying the electric motor (32) with electrical energy, wherein the at least one energy source (34) is arranged and enclosed within the safe chamber (12) having at least one wall element (10) according to any of the claims 1 to 8.

14. Aircraft (14) according to claim 13, wherein the at least one energy source is or comprises at least one fuel cell (42), especially a hydrogen powered fuel cell.
